(19) Europäisches Patentamt
European Patent Office
Office européen des brevets

(11) EP 0 716 045 B1

(12) **FASCICULE DE BREVET EUROPEEN**

(45) Date de publication et mention de la délivrance du brevet:
**11.08.1999 Bulletin 1999/32**

(51) Int Cl.[6]: **C02F 1/50**, C09D 5/14, A01N 33/04, C09D 5/16

(21) Numéro de dépôt: **95402680.3**

(22) Date de dépôt: **29.11.1995**

(54) **Utilisation pour le traitement d'eau et des surfaces en contact avec ladite eau en vue d'empêcher la fixation et/ou d'éliminer et/ou contrôler des macroorganismes, composition et peinture pour ledit traitement**

Anwendung zur Behandlung von Wasser und Oberflächen, die mit dem genannten Wasser in Kontakt stehen, zwecks der Verhinderung des Anwachsens und/oder der Abtötung und/oder der Anwachskontrolle von Makroorganismen; Zusammensetzung und Beschichtung dafür

Use for treating water and surfaces in contact with water to prevent the deposition of and/or the removal of and/or for the control of macroorganisms, as well as composition and paint therefor

(84) Etats contractants désignés:
**AT BE CH DE DK ES FR GB GR IE IT LI LU MC NL PT SE**

(30) Priorité: **08.12.1994 FR 9414762**

(43) Date de publication de la demande:
**12.06.1996 Bulletin 1996/24**

(73) Titulaire: **Vanlaer, Antoine**
**75004 Paris (FR)**

(72) Inventeur: **Vanlaer, Antoine**
**75004 Paris (FR)**

(74) Mandataire: **Peuscet, Jacques**
**SCP Cabinet Peuscet et Autres,**
**78, avenue Raymond Poincaré**
**75116 Paris (FR)**

(56) Documents cités:
**EP-A- 0 017 611**
**EP-A- 0 364 271**
**DE-A- 1 961 791**
**FR-A- 1 601 304**
**FR-A- 2 701 713**

EP 0 716 045 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne l'utilisation pour le traitement de l'eau et des surfaces en contact avec celle-ci en vue d'empêcher la fixation et/ou d'éliminer et/ou contrôler des macroorganismes appartenant au règne animal sur les surfaces en contact avec l'eau, une composition à injecter dans l'eau et une peinture à appliquer sur les surfaces en contact avec l'eau pour ledit traitement.

De nombreuses industries utilisent soit de l'eau douce telle que l'eau de rivière, de fleuves, de lacs, de réservoirs naturels ou de barrage, de forage dans le sol, de puisage, soit de l'eau salée telle que l'eau de mer. Cette eau est, par exemple, utilisée dans les circuits de chaudière ou dans les circuits d'eau de refroidissement. L'eau circule dans les installations industrielles dans des conduits à ciel ouvert ou fermés. La circulation peut s'effectuer en circuit ouvert, l'eau étant prélevée, par exemple dans une rivière, et rejetée ensuite en aval ou bien l'eau circule en circuit fermé et/ou semi-fermé, l'eau étant réutilisée plusieurs fois.

Il est connu que, sur les surfaces des installations dans lesquelles l'eau circule ou est stockée, se développent d'abord des microorganismes qui forment sur lesdites surfaces un voile biologique ou bactérien constitué de matières organiques, de bactéries, d'algues, de protozoaires ou autres microorganismes. Ce voile biologique peut conduire à des pertes importantes de rendement, dans les échangeurs thermiques par exemple. De plus, la présence de ce voile biologique peut provoquer des corrosions localisées qui sont liées à la présence physique et au métabolisme des microorganismes constituant ledit voile. Il se développe également ultérieurement, sur les surfaces en contact avec l'eau, des macroorganismes appartenant au règne animal qui peuvent être des mollusques tels que moules, clams et bernacles, des serpulides, des crustacés, des hydraires, des bryozoaires et des hydrozoaires. Ces macroorganismes forment des enrochages sur les surfaces des installations en contact avec l'eau. Ces enrochages sont difficiles à éliminer et il est souvent nécessaire d'arrêter l'installation et de la vider de son eau, puis d'enlever mécaniquement ou manuellement lesdits enrochages. On a donc cherché à introduire dans l'eau comme produits actifs des composés ayant une action biocide et/ou biostatique susceptible d'empêcher la croissance et des macroorganismes et leur fixation sur les surfaces en contact avec l'eau.

De nombreux composés dits "biocides" ont été proposés et utilisés pour le traitement de l'eau. On utilise le plus souvent, en pratique, des halogènes ou des dérivés organiques ou minéraux halogénés, tels que le chlore, le brome, l'iode, le chlorure de potassium, l'acide hypochloreux et ses sels de sodium ou de calcium, l'acide hypobromeux, les sels des acides dichloro- et trichloroisocyanuriques ou les hydantoïnes halogénés ; mais ces composés ont l'inconvénient d'être corrosifs et de former avec les matières organiques contenues dans l'eau des composés chlorés fortement toxiques. On a également proposé l'utilisation de dérivés ammonium quaternaire ou de dérivés peroxygénés, de phénols et dérivés de phénols, de métaux lourds ou de leurs dérivés organiques, de formol, d'acide benzoïque et de benzoates pour des traitements par injection ou par contact avec un revêtement. Mais la plupart de ces composés sont coûteux et il n'est pas pensable de les utiliser dans les installations industrielles utilisant de grandes quantités d'eau. D'autre part, nombre d'entre eux laissent des résidus toxiques, corrosifs ou difficilement biodégradables dans l'eau traitée.

Les composés biocides sont généralement utilisés sous forme de solution ou de dispersion dans une phase aqueuse contenant éventuellement des solvants organiques. Dans ce cas, ils sont le plus souvent injectés dans l'eau à traiter. Cependant, dans certains cas, en particulier lorsque ces composés biocides sont peu solubles dans l'eau, ils sont incorporés dans un matériau, par exemple une peinture, et on applique le matériau contenant le composé biocide sur la surface à protéger, par exemple une coque de bateau, de façon à traiter l'eau en contact avec la surface à protéger.

De façon générale, un composé biocide susceptible de détruire et/ou éliminer et/ou contrôler les macroorganismes d'origine animale doit, pour être utilisable de façon appropriée dans un procédé de traitement de l'eau industrielle, en particulier dans une installation en circuit ouvert, présenter également les propriétés suivantes :

- empêcher la corrosion des surfaces en contact avec l'eau, que cette corrosion provienne de produits chimiques contenus dans l'eau, tels que $CO_2$, ou du voile biologique,
- empêcher la formation du voile biologique,
- ne laisser aucun résidu toxique ou corrosif dans l'eau après utilisation, de façon à préserver la flore et la faune en aval de l'installation industrielle et ainsi protéger l'environnement.

Il est connu par FR-A-1 601 304 que l'on peut obtenir un revêtement algicide en utilisant des monoamines et des polyamines grasses que l'on dépose sur les surfaces en contact avec l'eau que l'on désire protéger. Il est également connu par EP-A-0 017 611 que les amines grasses sont susceptibles de détruire les microorganismes et, par conséquent, le voile biologique.

Selon la présente invention, on a trouvé que les amines grasses, plus spécialement un mélange particulier de polyamines grasses, permettaient d'éliminer et/ou contrôler les macroorganismes appartenant au règne animal,

plus particulièrement les mollusques, des surfaces en contact avec l'eau. Elles permettent plus particulièrement d'éliminer le problème posé par les moules zébrées ou dreissènes dans les installations industrielles dans lesquelles l'eau circule en circuit ouvert, telles que les installations de refroidissement dans les centrales thermiques ou nucléaires.

La présente invention a donc pour objet l'utilisation pour le traitement de l'eau et des surfaces en contact avec celle-ci en vue d'empêcher la fixation et/ou de détruire des macroorganismes appartenant au règne animal, en particulier des mollusques, sur les surfaces en contact avec l'eau d'au moins une polyamine de formule I :

$$R_1\text{-NH}[(CH_2)_3\text{-NH}]_n\text{-}(CH_2)_3NH_2 \qquad (I)$$

formule dans laquelle $R_1$ est un radical alkyle ou alkényle en $C_8$-$C_{22}$ et n est un nombre entier compris entre 0 et 3 (bornes incluses), et/ou au moins une monoamine de formule II :

$$R_2NH_2 \qquad (II)$$

formule dans laquelle $R_2$ est un radical alkyle ou alkényle en $C_8$-$C_{22}$ comme produits biocides actifs.

Selon l'invention, on utilise plus particulièrement, comme produits actifs de formule I, un mélange contenant d'une part au moins une polyamine de formule I, dans laquelle $R_1$ est un radical dodécyle, et/ou au moins une polyamine de formule I, dans laquelle $R_1$ est un radical tétradécyle, et d'autre part, au moins une polyamine de formule I, dans laquelle $R_1$ est un radical octadécényle. Ce mélange peut également contenir d'autres monoamines et/ou polyamines.

Selon la présente invention, les amines et les polyamines sont utilisées telles quelles et non sous forme de sels ou d'autres dérivés.

Selon la présente invention, le(s) produit(s) actif(s) peut (peuvent) avantageusement être injecté(s) dans l'eau. Selon l'invention, l'injection dans l'eau du (des) produit(s) actif(s) peut être effectuée dans l'eau à traiter en continu et/ou de façon intermittente. Dans le premier cas, une dose nécessaire pour obtenir une concentration entre 0,01 et 1,5 ppm de produit(s) de formule(s) I et/ou II par litre d'eau peut être convenable au niveau des surfaces traitées. Dans le second cas, des injections quotidiennes de produit(s) de formule(s) I et/ou II de façon à obtenir une concentration de l'ordre de 6 mg/l pendant 1,5 heure peuvent entraîner l'éradication d'une population de dreissènes en un mois. Les concentrations nécessaires de(s) produit(s) actif(s) de formule(s) I et/ou II dépendent des macroorganismes à éliminer, de la dimension et de la nature des surfaces en contact avec l'eau et du débit d'eau et peuvent facilement être déterminées par l'homme de métier.

De façon avantageuse, le traitement de l'eau par le(s) produit(s) actif(s) s'effectue par injection dans l'eau d'une composition biocide contenant l'ensemble des produits actifs de formule(s) I et/ou II à mettre en oeuvre pour le traitement. Mais il est possible d'envisager des injections séparées des différents produits actifs à mettre en oeuvre, chaque injection étant réalisée au moyen d'une composition biocide partielle. L'invention a aussi pour objet des compositions biocides mises en oeuvre pour le procédé de traitement ci-dessus défini contenant à la fois, d'une part, au moins une polyamine de formule I dans laquelle $R_1$ est un radical dodécyle et/ou au moins une polyamine de formule I dans laquelle $R_1$ est un radical tétradécyle et, d'autre part, au moins une polyamine de formule I dans laquelle $R_1$ est un radical octadécényle.

Ces compositions sont, dans la pratique, obtenues, de préférence, par mélange de polyamines dérivées du suif et/ou de polyamines dérivées d'une huile végétale ou animale contenant de l'oléine avec des polyamines dérivées du coprah.

Pour l'injection dans l'eau, on met, de préférence, les compositions sous forme d'émulsion, et mieux de microémulsion, dans une phase aqueuse car les amines de formule (s) I et/ou II, telles quelles, ne sont pas solubles dans l'eau. Pour émulsionner le(s) produit(s) actif(s), on utilise avantageusement un agent tensioactif émulsifiant. Cet agent émulsifiant comprend, de façon avantageuse, au moins une amine tertiaire polyoxyéthylénée de formule III :

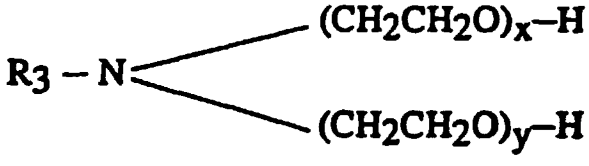

(III)

formule dans laquelle $R_3$ est un radical alkyle ou alkényle en $C_8$-$C_{22}$, de préférence un radical hexadécyle, stéaryle ou oléyle et x et y sont des nombres entiers tels que x + y soit compris entre 5 et 50, de préférence entre 10 et 20.

L'agent émulsifiant peut représenter de 5 à 45 % en poids, de préférence de 15 à 35 % en poids par rapport au poids de l'ensemble formé par le(s) produit(s) actif(s) de formule(s) I et/ou II.

La phase aqueuse peut contenir au moins un solvant organique en plus de l'eau. Ce solvant organique est, de façon appropriée, choisi dans le groupe formé par le diéthylène glycol, l'hexylène glycol, le monopropylène glycol et un aminoalcool de formule IV :

$$HO\text{-}A\text{-}NR_4R_5 \qquad (IV)$$

formule dans laquelle A est un radical alkylène, linéaire ou ramifié, en $C_2$-$C_4$ et $R_4$ et $R_5$, identiques ou différents, sont H ou un radical alkyle en $C_1$-$C_3$.

La phase aqueuse de l'émulsion, y compris éventuellement le solvant, peut représenter jusqu'à 90 % en poids de ladite émulsion.

Selon la présente invention, on peut également traiter l'eau en appliquant sur les surfaces en contact avec l'eau un revêtement contenant au moins un produit actif de formule(s) I et/ou II, en particulier une peinture. Selon un mode de réalisation particulier d'une telle peinture, on mélange les produits actifs de formule(s) I et/ou II avec une charge pulvérulente, par exemple la silice micronisée, de façon à obtenir un produit pulvérulent que l'on introduit ensuite dans une peinture de la même façon qu'un pigment. L'invention a donc aussi pour objet une peinture utilisée pour la mise en oeuvre de cette variante du procédé, peinture qui contient, d'une part, au moins une polyamine de formule I dans laquelle $R_1$ est un radical dodécyle et/ou au moins une polyamine de formule I dans laquelle $R_1$ est un radical tétradécyle et, d'autre part, au moins une polyamine de formule I dans laquelle $R_1$ est un radical octadécényle.

Selon la présente invention, on a trouvé que les polyamines de formule I et les amines de formule II avaient une activité sur les macroorganismes appartenant au règne animal se fixant sur les surfaces en contact avec l'eau, qu'il y ait ou non possibilité de photosynthèse. Ces macroorganismes pouvent être des serpulides, des crustacés, des hydraires, des bryozoaires et des hydrozoaires et plus spécialement des mollusques par exemple les moules, les bernacles et les clams. Pour simplifier, cette activité contre les macroorganismes sera dans la suite de la demande désignée par les termes "activité molluscicide". On a également trouvé selon la présente invention que cette activité "molluscicide" est particulièrement élevée lorsqu'on mélange des polyamines comportant une chaîne grasse $R_1$ qui est une chaîne dodécyle (ou lauryle) et/ou une chaîne tétradécyle (ou mirystyle) avec des polyamines comportant une chaîne grasse $R_1$ octadécényle (ou oléyle). En effet, il y a une réaction synergique entre ces deux types de polyamines comme le montrent les exemples donnés ci-après. Ce mélange préféré de polyamines peut contenir, en plus, d'autres polyamines, sans que la synergie soit modifiée. C'est, en particulier, le cas lorsqu'on utilise

- soit des polyamines de formule I commerciales, dont la chaîne grasse est dérivée du coprah et contient, en plus des polyamines de formule I à chaîne grasse en $C_{12}$ et $C_{14}$, des polyamines à radical $R_1$ en $C_8$, $C_{10}$, $C_{16}$, $C_{18}$ et $C_{18}$ monoinsaturé,
- soit des polyamines de formule I commerciales, dont la chaîne grasse est dérivée du suif et contient en plus du radical $R_1$ en $C_{18}$ monoinsaturé des radicaux $R_1$ en $C_{14}$, $C_{16}$ et $C_{18}$,
- soit des polyamines de formule I commerciales dérivées d'huile végétale ou animale contenant de l'oléine dont la chaîne grasse comporte en plus de radicaux $R_1$ en $C_{18}$ monoinsaturé, généralement des radicaux $R_1$ en $C_{14}$, $C_{16}$, $C_{16}$ monoinsaturé, $C_{18}$ saturé et parfois $C_{18}$ diénique.

Ce mélange peut contenir également des amines $R_2NH_2$, qui sont associées aux polyamines de formule I dans les produits commerciaux et dont les radicaux $R_2$ sont généralement les mêmes que les radicaux $R_1$ des polyamines de formule I; dans ce cas, la teneur en monoamines ne dépasse pas 15 % en poids.

Des essais ont montré que la composition biocide selon la présente invention permettait d'éliminer les moules zébrées (Dreissena Polymorpha) dans une installation de refroidissement d'une centrale thermique ou nucléaire dans laquelle l'eau circule en circuit ouvert en l'injectant dans l'eau sous forme de microémulsion. De plus, on a trouvé que la composition utilisée selon l'invention permet d'empêcher la fixation des mollusques sur les surfaces en contact avec l'eau ou de les décoller de ces surfaces, éventuellement sans les détruire. En effet, il a été observé par des essais en laboratoire que la composition utilisée selon l'invention provoque une inhibition de la croissance des filaments de byssus des moules zébrées. On a également observé une faible adhérence des bernacles et des balanes sur les surfaces en contact avec l'eau, avec possibilité de détachement de ces surfaces, en présence de ladite composition biocide.

Il est connu, par ailleurs, que les amines à chaîne grasse utilisées ont un effet filmogène stable et qu'elles se fixent sous forme d'un film sur les surfaces en contact avec l'eau lorsqu'elles sont injectées dans l'eau. Par conséquent, les quantités nécessaires de composition biocide, quand le traitement est effectué par injection, sont faibles

car le film fixé sur les surfaces a une action prolongée sur les macroorganismes. Ce n'est pas le cas du chlore et de ses dérivés (dioxyde de chlore et composés organochlorés) et des dérivés ammonium quaternaire, composés le plus généralement utilisés dans l'état de la technique pour éliminer les macroorganismes, qui ne se fixent pas sur les surfaces et se répartissent dans l'ensemble du volume d'eau. Par conséquent, selon le procédé de traitement de l'invention, la quantité de composition biocide à injecter dans l'eau dépend plus des surfaces en contact avec l'eau que du débit d'eau dans l'installation. En particulier, pour traiter une surface déterminée, on peut introduire d'abord une concentration plus élevée de composition biocide selon l'invention de façon à former le film sur la surface et ensuite maintenir une concentration plus faible de composition biocide au niveau de la surface à protéger pour renouveler le film et agir sur les macroorganismes.

La composition biocide utilisée selon l'invention permet également d'éviter de façon connue la formation du voile biologique due aux microorganismes ou de le détruire lorsqu'il est formé et d'éviter la corrosion due à ce voile biologique. Elle a également l'action anticorrosion et l'action antitartre connues pour les amines.

L'action biocide et anticorrosion de la composition biocide utilisée selon l'invention a été vérifiée dans le cas de nombreuses surfaces en acier, cuivre, céramique, verre et matière plastique par exemple.

Par ailleurs, la composition biocide utilisée n'est pas toxique. En effet, la durée de vie des amines et polyamines dans le milieu traité est relativement courte et il ne se forme pas de produits toxiques secondaires. On a constaté que l'eau résiduaire sortant d'une installation de refroidissement d'une centrale, dont l'eau est traitée par le procédé selon l'invention, n'a pas d'action toxique sur les poissons, en particulier sur de jeunes perches et des brèmes.

Les compositions utilisées selon l'invention sont préparées par mélange des constituants. Dans la pratique, on obtient une composition particulièrement appropriée en mélangeant au moins une polyamine dérivée du coprah, avec au moins une polyamine dérivée du suif et/ou au moins une polyamine dérivée d'une huile végétale ou animale contenant de l'oléine.

Les exemples, donnés ci-après à titre illustratif et non limitatif, permettront de mieux comprendre l'invention.

**EXEMPLES 1 à 82 :**

Les exemples 1 à 82 concernent des essais de traitement par injection dans l'eau de la composition biocide selon l'invention.

**A) Matériel mis en oeuvre :**

1 - **Polyamines**

Le tableau I donné ci-après donne la répartition des chaînes grasses dans les polyamines commerciales utilisées. Dans la première colonne du tableau I, est donnée la dénomination commerciale de la polyamine ; par exemple "suif" désigne une polyamine, dont la chaîne grasse $R_1$ est dérivée du suif et "octyle" désigne une polyamine commerciale dérivée d'acide octanoïque industriel.

TABLEAU I

| | COMPOSITION MOYENNE DES CHAÎNES GRASSES %en poids | | | | | | | |
|---|---|---|---|---|---|---|---|---|
| CHAÎNES | C8 | C10 | C12 | C14 | C16 | C16.1* | C18 | C18.1* |
| Octyle ou capryle | 98 | 2 | | | | | | |
| Décyle | | >90 | | | | | | |
| Dodécyle ou lauryle | | 1-2 | 96-98 | 1-3 | | | | |
| Tétradécyle ou myristyle | | | 2-4 | 92-96 | 2-4 | | | |
| Octadécyle ou stéaryle | | | | | 7-10 | | 90 | |
| Coprah | 3-7 | 5-7 | 48-54 | 18-20 | 9-14 | 8-12 | 2-8 | 4-6 |
| Suif | | | | 4-5 | 30 | | 20-21 | 45 |
| Oléyle | | | 0-1 | 0-4 | 5-12 | 6 | 10 | 70-72 |

*C16.1 = chaîne hexadécényle
C18.1 = chaîne octadécényle

2 - **Macroorganismes**

Des dreissènes adultes (Dreissena Polymorpha Pallas) (18 à 23 mm de longueur) ont été collectées dans la Moselle. Les mollusques sont maintenus au laboratoire dans de l'eau de conduite d'eau potable déchlorée et aérée en permanence dans les conditions suivantes :

- température : 18°C ± 1°C
- pH : 7,6-8,2.

Les dreissènes sont nourries quotidiennement avec des algues vertes, de l'espèce *chlamydomonas*, préalablement congelées. Les cubes d'algues congelées sont suspendus au-dessus des bacs d'expérimentation et distribuent progressivement les algues en fondant.

**B - Méthodes**

Tests de mortalité : Les dreissènes adultes (18-23 mm) sont acclimatées aux conditions du laboratoire pendant trois jours durant lesquels elles se fixent au support (plaque de verre).

Le système expérimental est constitué de bacs de 12 litres alimentés en continu (débit : 100 ml/min.) par de l'eau de conduite d'eau potable préalablement déchlorée. L'eau des bacs est aérée en permanence et le milieu est homogénéisé avec une pompe fonctionnant en circuit fermé (débit : 6 l/min.).

50 dreissènes constituent l'échantillon expérimental de départ pour chaque support et chaque concentration testée. Chaque échantillon est soumis à des injections journalières de 90 minutes ou 180 minutes de façon à obtenir des concentrations de 2, 6 et 10 mg de composition par litre d'eau dans les bacs, cela pour chaque composition afin de déterminer l'efficacité optimale.

La mortalité est évaluée journellement pendant un mois ; elle est établie lorsque les dreissènes maintiennent leurs valves ouvertes et ne répondent plus à un stimulus tactile.

L'échantillon de contrôle est soumis aux mêmes conditions expérimentales mais est maintenu exclusivement dans de l'eau de conduite d'eau potable déchlorée.

Pour déterminer l'existence d'une synergie molluscicide pour le mélange de deux substances testées, on a utilisé la méthode proposée par Kull F.C., Eismann P.C., Sylvestrowicz H.D., Mayer R.L. (1961), Appl. Microbiol. 9, 538-541, pour déterminer la synergie biostatique. La formule adoptée est la suivante :

$$\frac{Q_A}{C_A} + \frac{Q_B}{C_B} = X$$

dans laquelle :

$C_A$ est la concentration molluscicide minimale de la substance A
$Q_A$ est la quantité de substance A dans la concentration molluscicide minimale du mélange A/B
$C_B$ est la concentration molluscicide minimale de la sustance B
$Q_B$ est la quantité de substance B dans la concentration molluscicide minimale du mélange A/B

Lorsque X = 1, il y a additivité des effets, lorsque X > 1, il y a antagonisme et lorsque X < 1, il y a synergie.

Les compositions ont été préparées sous forme de microémulsions en mélangeant une ou plusieurs polyamines avec du 2-amino-2-méthyl 1-propanol et une amine éthoxylée, comme agents tensioactifs émulsionnants, et de l'eau. La Genamin® 0-200 est une oléylamine portant 20 motifs oxyde d'éthylène.

Sur le tableau 2 sont données à titre comparatif, les concentrations molluscicides optimales pour différentes polyamines utilisées seules.

Tableau 2

| EXEMPLES | 1 | 2 | 3 | 4 | 5 | 6 | 7 | 8 | 9 |
|---|---|---|---|---|---|---|---|---|---|
| PRODUITS | COMPOSITION EN % EN POIDS | | | | | | | | |
| N-octyl-amine | 10 | | | | | | | | |
| N-décyl-amine | | 10 | | | | | | | |
| N-dodécyle-amine | | | 10 | | | | | | |
| N-tétradécyl-amine | | | | 10 | | | | | |
| N-hexadécyl-amine | | | | | 10 | | | | |
| N-oléyl-amine | | | | | | 10 | | | |
| N-octadécyl-amine | | | | | | | 10 | | |
| N-érucidyl-amine | | | | | | | | 10 | |
| N-béhényl-amine | | | | | | | | | 10 |
| 2-amino-2-méthyl-1-propanol | 2,5 | 2,5 | 2,5 | 2,5 | 2,5 | 2,5 | 2,5 | 2,5 | 2,5 |
| GENAMIN® O-200 | 2,5 | 2,5 | 2,5 | 2,5 | 2,5 | 2,5 | 2,5 | 2,5 | 2,5 |
| EAU | 85 | 85 | 85 | 85 | 85 | 85 | 85 | 85 | 85 |
| CONCENTRATION MOLLUSCICIDE | 10 | 8 | 8 | 10 | 11 | 9 | 11 | 13 | 14 |

Tableau 2 (suite)

| EXEMPLES | 11 | 12 | 13 | 14 | 15 | 16 | 17 | 18 | 19 |
|---|---|---|---|---|---|---|---|---|---|
| PRODUITS | COMPOSITION EN % EN POIDS | | | | | | | | |
| N-octyl-1,3-propylène diamine | 10 | | | | | | | | |
| N-décyl-1,3 propylène diamine | | 10 | | | | | | | |
| N-dodécyl-1,3 propylène diamine | | | 10 | | | | | | |
| N-tétradécyl-1,3 propylène diamine | | | | 10 | | | | | |
| N-hexadécyl-1,3 propylène diamine | | | | | 10 | | | | |
| N-oléyle-1,3 propylène diamine | | | | | | 10 | | | |
| N-octadécyl-1,3 propylène diamine | | | | | | | 10 | | |
| N-coprah-1,3 propylène diamine | | | | | | | | 10 | |
| N-suif-1,3 propylène diamine | | | | | | | | | 10 |
| 2-amino-2-méthyl-1-propanol | 2,5 | 2,5 | 2,5 | 2,5 | 2,5 | 2,5 | 2,5 | 2,5 | 2,5 |
| GENAMIN® 0-200 | 2,5 | 2,5 | 2,5 | 2,5 | 2,5 | 2,5 | 2,5 | 2,5 | 2,5 |
| EAU | 85 | 85 | 85 | 85 | 85 | 85 | 85 | 85 | 85 |
| CONCENTRATION MOLLUSCICIDE | 8 | 6 | 6 | 8 | 10 | 8 | 9 | 6 | 8,5 |

On voit, sur ce tableau 2, que les différentes amines et diamines, utilisées seules, ont une action molluscicide.

Sur le tableau 3, est donnée l'action molluscicide de différents mélanges de diamines.

Tableau 3

| EXEMPLES | 20 | 21 | 22 | 23 | 24 | 25 | 26 | 27 | 28 | 29 |
|---|---|---|---|---|---|---|---|---|---|---|
| PRODUITS | COMPOSITION % EN POIDS | | | | | | | | | |
| N-dodécyl-1,3 propylène diamine | 8 | 6 | 5 | 4 | 2 | 8 | 6 | 5 | 4 | 2 |
| N-tétradécyl-1,3 propylène diamine | 2 | 4 | 5 | 6 | 8 | - | - | - | - | - |
| N-oléyl-1,3 propylène diamine | - | - | - | - | - | 2 | 4 | 5 | 6 | 8 |
| 2-amino-2-méthyl-1-propanol | 2,5 | 2,5 | 2,5 | 2,5 | 2,5 | 2,5 | 2,5 | 2,5 | 2,5 | 2,5 |
| GENAMIN® 0-200 | 2,5 | 2,5 | 2,5 | 2,5 | 2,5 | 2,5 | 2,5 | 2,5 | 2,5 | 2,5 |
| EAU | 85 | 85 | 85 | 85 | 85 | 85 | 85 | 85 | 85 | 85 |
| CONCENTRATION MOLLUSCICIDE | 6,5 | 7 | 7 | 7,5 | 7,5 | 6,1 | 6,0 | 6,1 | 6,4 | 7,1 |
| VALEUR de X | 1 | 1 | 1 | 1 | 1 | 0,96 | 0,90 | 0,89 | 0,91 | 0,96 |

Tableau 3 (suite)

| EXEMPLES | 30 | 31 | 32 | 33 | 34 | 35 | 36 | 37 | 38 | 39 |
|---|---|---|---|---|---|---|---|---|---|---|
| PRODUITS | COMPOSITION % EN POIDS | | | | | | | | | |
| N-dodécyl-1,3 propylène diamine | - | - | - | - | - | - | - | - | - | - |
| N-tétradécyl-1,3 propylène diamine | 8 | 6 | 5 | 4 | 2 | - | - | - | - | - |
| N-oléyl-1,3 propylène diamine | 2 | 4 | 5 | 6 | 8 | 1 | 2 | 2 | 4 | 5 |
| N-coprah-1,3 propylène diamine | - | - | - | - | - | 9 | 8 | 7 | 6 | 5 |
| 2-amino-2-méthyl-1-propanol | 2,5 | 2,5 | 2,5 | 2,5 | 2,5 | 2,5 | 2,5 | 2,5 | 2,5 | 2,5 |
| GENAMIN® 0-200 | 2,5 | 2,5 | 2,5 | 2,5 | 2,5 | 2,5 | 2,5 | 2,5 | 2,5 | 2,5 |
| EAU | 85 | 85 | 85 | 85 | 85 | 85 | 85 | 85 | 85 | 85 |
| CONCENTRATION MOLLUSCICIDE | 7,6 | 7,1 | 7,1 | 7,4 | 7,7 | 5,9 | 6,0 | 5,9 | 5,6 | 5,7 |
| VALEUR de X | 0,95 | 0,88 | 0,89 | 0,92 | 0,96 | 0,97 | 0,96 | 0,94 | 0,88 | 0,88 |

Tableau 3 (suite)

| EXEMPLES | 40 | 41 | 42 | 43 | 44 | 45 | 46 | 47 | 48 | 49 | 50 |
|---|---|---|---|---|---|---|---|---|---|---|---|
| PRODUITS | COMPOSITION % EN POIDS | | | | | | | | | | |
| N-coprah-1,3 propylène diamine | 4 | 3 | 2 | 9 | 8 | 7 | 6 | 5 | 4 | 3 | 2 |
| N-oléyl-1,3 propylène diamine | 6 | 7 | 8 | - | - | - | - | - | - | - | - |
| N-suif-1,3 propylène diamine | - | - | - | 1 | 2 | 3 | 4 | 5 | 6 | 7 | 8 |
| 2-amino-2-méthyl-1-propanol | 2,5 | 2,5 | 2,5 | 2,5 | 2,5 | 2,5 | 2,5 | 2,5 | 2,5 | 2,5 | 2,5 |
| GENAMIN® 0-200 | 2,5 | 2,5 | 2,5 | 2,5 | 2,5 | 2,5 | 2,5 | 2,5 | 2,5 | 2,5 | 2,5 |
| EAU | 85 | 85 | 85 | 85 | 85 | 85 | 85 | 85 | 85 | 85 | 85 |
| CONCENTRATION MOLLUSCICIDE | 5,9 | 6,1 | 6,4 | 5,9 | 6,1 | 6,2 | 6,1 | 6,4 | 6,8 | 7,2 | 7,5 |
| VALEUR de X | 0,90 | 0,91 | 0,94 | 0,95 | 0,96 | 0,94 | 0,89 | 0,91 | 0,93 | 0,95 | 0,96 |

Ce tableau montre que le mélange de dodécyle propylène amine et de tétradécyle propylène diamine ne provoque aucun effet synergétique sur l'action molluscicide mais que dès que le mélange contient une octadécényle (C18.1) propylène diamine, il y a synergie (X est inférieur à 1).

Le tableau 4 indique les concentrations molluscicides en présence de triamines et de tétramines seules (exemples 52 à 55) ou en mélange avec d'autres polyamines (exemples 51 et 53 à 65).

Tableau 4

| EXEMPLES | 51 | 52 | 53 | 54 | 55 | 56 | 57 |
|---|---|---|---|---|---|---|---|
| PRODUITS | COMPOSITION EN % EN POIDS | | | | | | |
| N-coprah-1,3-propylène diamine | | | | | | 5 | 5 |
| N-coprah-$[NH(CH_2)_3]_2NH_2$ | 10 | | | | | | |
| N-oléyl-$[NH(CH_2)_3]_2NH_2$ | | 10 | | | | 5 | |
| N-suif-$[NH(CH_2)_3]_2NH_2$ | | | 10 | | | | |
| N-coprah-$[NH(CH_2)_3]_3NH_2$ | | | | 10 | | | |
| N-oléyl-$[NH(CH_2)_3]_3NH_2$ | | | | | 10 | | 5 |
| 2-amino-2-méthyl-1-propanol | 2,5 | 2,5 | 2,5 | 2,5 | 2,5 | 2,5 | 2,5 |
| GENAMIN® 0-200 | 2,5 | 2,5 | 2,5 | 2,5 | 2,5 | 2,5 | 2,5 |
| EAU | 85 | 85 | 85 | 85 | 85 | 85 | 85 |
| CONCENTRATION MOLLUSCICIDE | 6,5 | 7 | 8 | 6 | 7 | 6,4 | 6,2 |
| VALEUR de X | - | - | - | - | - | 0,96 | 0,93 |

Tableau 4 (suite)

| EXEMPLES | 58 | 59 | 60 | 61 | 62 | 63 | 64 | 65 |
|---|---|---|---|---|---|---|---|---|
| PRODUITS | COMPOSITION EN % EN POIDS | | | | | | | |
| N-coprah-1,3-propylène diamine | | | | | 8 | 2 | | 3 |
| N-oléyl-1,3-propylène diamine | 5 | 5 | | 4 | | | 8 | |
| N-coprah-$[NH(CH_2)_3]_2NH_2$ | 5 | | 5 | 6 | | | 2 | |
| N-coprah-$[NH(CH_2)_3]_3NH_2$ | | 5 | | | | | | 7 |
| N-oléyl-$[NH(CH_2)_3]_3NH_2$ | | | 5 | | 2 | 8 | | |
| 2-amino-2-méthyl-1-propanol | 2,5 | 2,5 | 2,5 | 2,5 | 2,5 | 2,5 | 2,5 | 2,5 |
| GENAMIN® 0-200 | 2,5 | 2,5 | 2,5 | 2,5 | 2,5 | 2,5 | 2,5 | 2,5 |
| EAU | 85 | 85 | 85 | 85 | 85 | 85 | 85 | 85 |
| CONCENTRATION MOLLUSCICIDE | 6,3 | 6,1 | 6,4 | 6,1 | 5,9 | 6,8 | 6,4 | 6,9 |
| VALEUR de X | 0,93 | 0,94 | 0,92 | 0,91 | 0,94 | 0,93 | 0,93 | 0,97 |

Le tableau 4 montre qu'il y a également synergie lorsque l'oléyle polyamine est une triamine ou une tétramine.

Les essais réunis au tableau 5 ont été effectués en présence de différents solvants et différents agents tensioactifs émulsifiants.

Tableau 5

| EXEMPLES | 66 | 67 | 68 | 69 | 70 | 71 | 72 | 73 |
|---|---|---|---|---|---|---|---|---|
| PRODUITS | COMPOSITION EN % EN POIDS | | | | | | | |
| N-coprah-1,3-propylène diamine | 4 | 4 | 4 | 4 | 4 | 4 | 4 | 4 |
| N-oléyl-1,3-propylène diamine | 6 | 6 | 6 | 6 | 6 | 6 | 6 | 6 |
| DIETHYLENE GLYCOL | 10 | | | | | | | |
| HEXYLENE GLYCOL | | 10 | | | | 10 | 10 | |
| MONOPROPYLENE GLYCOL | | | 10 | | | | | 10 |
| 2-amino-2-méthyl-1-propanol | 2,5 | 2,5 | 2,5 | 2,5 | 2,5 | 2,5 | 2,5 | 2,5 |
| GENAMIN® S-200* | 2,5 | 2,5 | 2,5 | | | | | |
| GENAMIN® O-250* | | | | 2,5 | | 2,5 | | |
| GENAMIN® T-200* | | | | | 2,5 | | | 2,5 |
| GENAMIN® T-250* | | | | | | | 2,5 | |
| EAU | 75 | 75 | 75 | 85 | 85 | 75 | 75 | 75 |
| CONCENTRATION MOLLUSCICIDE | 6 | 6 | 6 | 6,2 | 6,1 | 6,2 | 6,2 | 6,1 |
| VALEUR de X | 0,91 | 0,91 | 0,91 | 0,94 | 0,93 | 0,94 | 0,94 | 0,93 |

TABLEAU 5 (suite)

| EXEMPLES | 74 | 75 | 76 | 77 | 78 | 79 | 80 | 81 | 82 |
|---|---|---|---|---|---|---|---|---|---|
| PRODUITS | COMPOSITION EN % EN POIDS | | | | | | | | |
| N-coprah-1,3-propylène diamine | 4 | 4 | 4 | 4 | 4 | 4 | 4 | 4 | 4 |
| N-oléyl-1,3-propylène diamine | 6 | 6 | 6 | 6 | 6 | 6 | 4 | 6 | 6 |
| DIETHYLENE GLYCOL | | | | | | | | | 50 |
| HEXYLENE GLYCOL | | | | 50 | 50 | 50 | 50 | 50 | |
| MONOPROPYLENE GLYCOL | | | | | | | 2 | 2,5 | |
| 2-amino-2-méthyl-1-propanol | | | | | | 2 | 0,5 | 0,5 | |
| 2-diéthylamino-1-éthanol | 2,5 | 2,5 | 2,5 | 2,5 | 2,5 | 0,5 | | | 2,5 |
| GENAMIN® S-200* | | 2,5 | | | 2,5 | | | | |
| GENAMIN® O-250* | 2,5 | | | 2,5 | | | | | 2,5 |
| GENAMIN® T-200* | | | 2,5 | | | | | 2,5 | |
| GENAMIN® T-250* | | | | | | 2,5 | 2,5 | | |
| EAU | 85 | 85 | 85 | 35 | 35 | 35 | 35 | 35 | 35 |
| CONCENTRATION MOLLUSCICIDE | 6,2 | 6 | 6,1 | 6,2 | 6 | 6,2 | 6,2 | 6,1 | 6,2 |
| VALEUR de X | 0,94 | 0,91 | 0,93 | 0,94 | 0,91 | 0,94 | 0,94 | 0,93 | 0,94 |

*Genamin S-200 : amine de soja à 20 oxydes d'éthylène
Genamin O-250 : amine d'oléine à 25 oxydes d'éthylène
Genamin T-200 : amine de suif à 20 oxydes d'éthylène
Genamin T-250 : amine de suif à 25 oxydes d'éthylène

Ce tableau 5 montre que les différents solvants et les différents agents tensioactifs émulsifiants n'ont pratiquement pas d'action sur l'action molluscicide des polyamines.

**EXEMPLES 83 à 138 :**

Les exemples 83 à 138 concernent des essais de traitement par application sur les surfaces en contact avec l'eau d'une peinture bioactive.

**A) Méthode :**

On a réalisé une série de peintures bioactives contenant des compositions à base d'amines à longue chaîne, introduites dans une composition de revêtement correspondant à la formulation suivante exprimée en poids à sec :

| | |
|---|---|
| Résine vinylique | 27 parties en poids |
| Gomme laque | 33 parties en poids |
| Tricrésyl phosphate | 10 parties en poids |
| Rouge oxyde de fer | 5 parties en poids |
| Charge bioactive * | 25 parties en poids |

* Charge bioactive = 50 % en poids d'amines + 50 % en poids de Sylobloc 45® (Silice micronisée)

La charge bioactive est une poudre obtenue par mélange, dans une turbine à fort cisaillement, de l'amine à l'état liquide avec le Sylobloc 45®.

La composition de la charge bioactive est représentée par les compositions 83 à 138. Le revêtement bioactif a été obtenu par incorporation de la charge bioactive dans la formulation ci-dessus. Les composants de la formulation ont été préalablement dispersés, avec un mélange de 30 % en poids de solvant xylène/Solvesso 100 (72/28 en poids), à l'aide d'une turbine à fort cisaillement, à une vitesse de 20 000 tours/minute afin d'obtenir une dispersion fine et homogène avant introduction de la charge bioactive.

Des plaques en acier de 150 x 200 x 1,5 mm ont été sablées sur les deux faces puis revêtues de deux couches représentant, après séchage, une couche totale de 80 microns d'épaisseur avec chaque formulation bioactive ; les plaques témoin ont été traitées de la même façon, la formulation ne comportant néanmoins comme charge que de la silice "Sylobloc 45" sans aucune amine bioactive.

Deux séries de plaques ont ensuite été immergées en mer en zone sub-tropicale, suspendues par des filins en nylon à une profondeur de 1 mètre pour l'une et de 10 mètres pour l'autre afin de déterminer les propriétés anti-salissures. Les essais d'immersion ont duré pendant une première période de 1 mois en Janvier : les plaques ont ensuite été retirées et comparées aux plaques témoin ; après pesée, les plaques ont été débarrassées des dépôts fixés pour identification et dénombrement des espèces déposées par $m^2$. Une nouvelle série de plaques revêtues a été immergée dans les mêmes conditions pendant une durée de trois mois à trois reprises en Février, Mai, Août, Octobre puis examinée à nouveau par comparaison aux plaques témoin.

Dans le tableau 6 sont indiquées les différentes espèces les plus importantes, qui se sont fixées majoritairement sur les séries de plaques immergées comme témoins.

Tableau 6

| ESPECES | | | | | |
|---|---|---|---|---|---|
| BRYOZOAIRES | (POLYCHETES) SERPULIDES | (CIRRIPEDES) CRUSTACES | ASCIDIES | AMPHIPODES | HYDROZOAIRES |
| bugula<br>neritina | hydroïdes<br>norvegica | balanus<br>-amphitrite<br>-variegatus<br>-trigonus | cyona<br>intestinalis | ericthnius<br>pugnax | tubularia<br>mesembryanthenum |

**B - Résultats :**

L'activité inhibitrice des diverses compositions vis-à-vis des salissures marines a été appréciée en fonction du poids et du nombre des différentes espèces déposées sur les plaques expérimentales immergées près de la surface et en profondeur à l'issue des différentes périodes d'immersion. Le tableau 7 présente l'efficacité exprimée en % pour chaque composition de charge bioactive introduite dans la formule de revêtement. L'efficacité est calculée de la façon suivante : on mesure le poids de microorganismes sur chaque plaque traitée et sur la plaque témoin et on calcule la différence de poids. L'efficacité est exprimée en pour-cent. La valeur donnée est la moyenne arithmétique des valeurs obtenues.

Il apparaît que les mélanges de polyamines dérivées du coprah avec des polyamines dérivées du suif ou oléiques sont plus efficaces comme agents anti-salissures marines que les amines pures prises individuellement, comme le montre les résultats donnés dans le tableau 7.

Tableau 7

| EXEMPLES | 83 | 84 | 85 | 86 | 87 | 88 | 89 | 90 | 91 | 92 |
|---|---|---|---|---|---|---|---|---|---|---|
| PRODUITS | COMPOSITION EN % EN POIDS | | | | | | | | | |
| N-octyl-amine | 50 | | | | | | | | | |
| N-décyl-amine | | 50 | | | | | | | | |
| N-tétradécyl-amine | | | 50 | | | | | | | |
| N-hexadécyl-amine | | | | 50 | | | | | | |
| N-oléyl-amine | | | | | 50 | | | | | |
| N-octadécyl-amine | | | | | | 50 | | | | |
| N-octyl-1,3-propylène diamine | | | | | | | 50 | | | |
| N-décyl-1,3-propylène diamine | | | | | | | | 50 | | |
| N-dodécyl-1,3-propylène diamine | | | | | | | | | 50 | |
| N-tétradécyl-1,3-propylène diamine | | | | | | | | | | 50 |
| Sylobloc 45 | 50 | 50 | 50 | 50 | 50 | 50 | 50 | 50 | 50 | 50 |
| EFFICACITE en % | 5 | 10 | 30 | 20 | 17 | 15 | 5 | 12 | 30 | 25 |

Tableau 7 (suite)

| EXEMPLES | 93 | 94 | 95 | 96 | 97 | 98 | 99 | 100 | 101 | 102 |
|---|---|---|---|---|---|---|---|---|---|---|
| PRODUITS | COMPOSITION EN % EN POIDS | | | | | | | | | |
| N-hexadécyl-1,3-propylène diamine | 50 | | | | | | | | | |
| N-oléyl-1,3-propylène diamine | | 50 | | | 50 | | | | | |
| N-octadécyl-1,3-propylène diamine | | | 50 | | | | | | | |
| N-coprah-1,3-propylène diamine | | | | 50 | | | | | | |
| N-suif-1,3-propylène diamine | | | | | | 50 | | | | |
| N-dodécyl-1,3-propylène diamine | | | | | | | 40 | 30 | 25 | 20 |
| N-tétradécyl-1,3-propylène diamine | | | | | | | 10 | 20 | 25 | 30 |
| Sylobloc 45 | 50 | 50 | 50 | 50 | 50 | 50 | 50 | 50 | 50 | 50 |
| EFFICACITE en % | 15 | 20 | 10 | 25 | 20 | 15 | 20 | 20 | 25 | 20 |

Tableau 7 (suite)

| EXEMPLES | 103 | 104 | 105 | 106 | 107 | 108 | 109 | 110 | 111 |
|---|---|---|---|---|---|---|---|---|---|
| PRODUITS | COMPOSITION EN % EN POIDS | | | | | | | | |
| N-dodécyl-1,3-propylène diamine | 10 | 40 | 30 | 25 | 20 | | | | |
| N-tétradécyl-1,3-propylène diamine | 40 | | | | | 40 | 30 | 25 | 20 |
| N-oléyl-1,3-propylène diamine | | 10 | 20 | 25 | 30 | 10 | 20 | 25 | 30 |
| Sylobloc 45 | 50 | 50 | 50 | 50 | 50 | 50 | 10 | 50 | 50 |
| EFFICACITE en % | 25 | 50 | 55 | 60 | 40 | 40 | 45 | 45 | 40 |

Tableau 7 (suite)

| EXEMPLES | 112 | 113 | 114 | 115 | 116 | 117 | 118 | 119 | 120 |
|---|---|---|---|---|---|---|---|---|---|
| PRODUITS | COMPOSITION EN % EN POIDS | | | | | | | | |
| N-coprah-1,3-propylène diamine | 45 | 40 | 30 | 25 | 20 | 5 | 45 | 40 | 35 |
| N-oléyl-1,3-propylène diamine | | | | | | | 5 | 10 | 15 |
| N-suif-1,3-propylène diamine | 5 | 10 | 20 | 25 | 30 | 45 | | | |
| Sylobloc 45 | 50 | 50 | 50 | 50 | 50 | 50 | 50 | 50 | 50 |
| EFFICACITE en % | 50 | 45 | 55 | 50 | 40 | 37 | 45 | 30 | 55 |

Tableau 7 (suite)

| EXEMPLES | 121 | 122 | 123 | 124 | 125 | 126 | 127 | 128 | 129 |
|---|---|---|---|---|---|---|---|---|---|
| PRODUITS | COMPOSITION EN % EN POIDS | | | | | | | | |
| N-coprah-1,3-propylène diamine | 30 | 25 | 20 | 15 | 10 | | | | |
| N-oléyl-1,3-propylène diamine | 20 | 15 | 30 | 35 | 40 | | | | |
| N-dodécyl-$[NH(CH_2)_3]_2$-$NH_2$ | | | | | | 50 | | | |
| N-coprah-$[NH(CH_2)_3]_2$-$NH_2$ | | | | | | | 50 | | |
| N-oléyl-$[NH(CH_2)_3]_2$-$NH_2$ | | | | | | | | 50 | |
| N-suif-$[NH(CH_2)_3]_2$-$NH_2$ | | | | | | | | | 50 |
| Sylobloc 45 | 50 | 50 | 50 | 50 | 50 | 50 | 50 | 50 | 50 |
| EFFICACITE en % | 55 | 65 | 45 | 40 | 40 | 40 | 30 | 30 | 25 |

Tableau 7 (suite)

| EXEMPLES | 130 | 131 | 132 | 133 | 134 | 135 | 136 | 137 | 138 |
|---|---|---|---|---|---|---|---|---|---|
| PRODUITS | COMPOSITION EN % EN POIDS | | | | | | | | |
| N-coprah-1,3-propylène diamine | | | | 25 | 25 | | | | |
| N-oléyl-1,3-propylène diamine | | | | | | 25 | 25 | | 20 |
| N-coprah-$[NH(CH_2)_3]_2$-$NH_2$ | | | | | | 25 | | 25 | 30 |
| N-oléyl-$[NH(CH_2)_3]_2$-$NH_2$ | | | | 25 | | | | | |
| N-coprah-$[NH(CH_2)_3]_3$-$NH_2$ | 50 | | | | | | 25 | | |
| N-oléyl-$[NH(CH_2)_3]_3$-$NH_2$ | | 50 | | | 25 | | | 25 | |
| N-suif-$[NH(CH_2)_3]_3$-$NH_2$ | | | 50 | | | | | | |
| Sylobloc 45 | 50 | 50 | 50 | 50 | 50 | 50 | 50 | 50 | 50 |
| EFFICACITE en % | 35 | 30 | 35 | 50 | 45 | 45 | 40 | 40 | 50 |

Après une durée d'un mois, le pourcentage moyen de mortalité reste très faible dans le groupe de contrôle, indiquant que la mortalité enregistrée dans les groupes exposés au traitement selon l'invention résulte bien de l'action molluscicide testée.

**Revendications**

1. Utilisation pour le traitement d'eau et des surfaces en contact avec ladite eau en vue d'empêcher la fixation et/ou d'éliminer et/ou de contrôler des macroorganismes appartenant au règne animal, en particulier des mollusques, sur lesdites surfaces en contact avec l'eau, d'au moins une polyamine de formule I :

$$R_1\text{-NH}[(CH_2)_3\text{-NH}]_n\text{-}(CH_2)_3NH_2 \quad (I)$$

formule dans laquelle $R_1$ est un radical alkyle ou alkényle en $C_8$-$C_{22}$ et n est un nombre entier compris entre 0 et 3 (bornes incluses), et/ou d'au moins une monoamine de formule II :

$$R_2NH_2 \quad (II)$$

formule dans laquelle $R_2$ est un radical alkyle ou alkényle en $C_8$-$C_{22}$ comme produits biocides actifs.

2. Utilisation selon la revendication 1, caractérisée par le fait qu'on utilise, comme polyamine de formule I, un mélange contenant d'une part, au moins une polyamine de formule I, dans laquelle $R_1$ est un radical dodécyle, et/ou au moins une polyamine de formule I, dans laquelle $R_1$ est un radical tétradécyle, et d'autre part, au moins une polyamine de formule I dans laquelle $R_1$ est un radical octadécényle.

3. Utilisation selon l'une des revendications 1 ou 2, caractérisée par le fait que l'on injecte le(s) produit(s) actif(s) dans l'eau de façon intermittente.

4. Utilisation selon l'une des revendications 1 ou 2, caractérisée par le fait que l'on injecte le(s) produit(s) actif(s) dans l'eau, de façon continue.

5. Utilisation selon l'une des revendications 3 ou 4, caractérisée par le fait qu'on met en oeuvre le(s) produit(s) actif (s) sous forme d'une émulsion en phase aqueuse.

6. Utilisation selon la revendication 5, caractérisée par le fait que l'on utilise une émulsion de produit(s) actif(s) obtenue à l'aide d'un agent émulsifiant comprenant au moins une amine tertiaire polyoxyéthylénée de formule III :

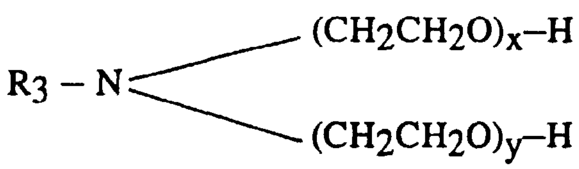

(III)

formule dans laquelle $R_3$ est un radical alkyle ou alkènyle en $C_8$-$C_{22}$ et x et y sont des nombres entiers tels que (x + y) soit compris entre 5 et 50.

7. Utilisation selon l'une des revendications 1 ou 2, caractérisée par le fait qu'on applique sur les surfaces en contact avec l'eau un revêtement contenant le(s) produit(s) actif(s).

8. Utilisation selon la revendication 7, caractérisée par le fait qu'on mélange au moins un produit actif de formule(s) I et/ou II avec une charge pulvérulente, on prépare une peinture en utilisant le mélange ainsi obtenu comme un pigment et on applique ladite peinture sur les surfaces en contact avec l'eau.

9. Composition biocide pour l'utilisation selon l'une des revendications 3 ou 4, caractérisée par le fait qu'elle comporte un mélange de polyamines contenant d'une part, au moins une polyamine de formule I dans laquelle $R_1$ est un radical dodécyle et/ou au moins une polyamine de formule I dans laquelle $R_1$ est un radical tétradécyle et, d'autre part, au moins une polyamine de formule I dans laquelle $R_1$ est un radical octadécényle.

10. Composition selon la revendication 9, caractérisée par le fait qu'elle comporte un mélange de polyamine(s) dérivée(s) du suif et/ou de polyamine(s) dérivée(s) d'une huile végétale ou animale contenant de l'oléine avec au moins une polyamine dérivée du coprah.

**11.** Composition selon l'une des revendications 9 ou 10, caractérisée par le fait qu'elle contient au plus 15 % en poids d'amine(s) de formule II.

**12.** Composition selon l'une des revendications 9 à 11, pour l'utilisation selon la revendication 5, caractérisée par le fait qu'elle est sous forme d'une émulsion aqueuse.

**13.** Composition selon la revendication 12, pour l'utilisation selon la revendication 6, caractérisée par le fait qu'elle comprend un agent émulsifiant comprenant au moins une amine tertiaire polyoxyéthylénée de formule III :

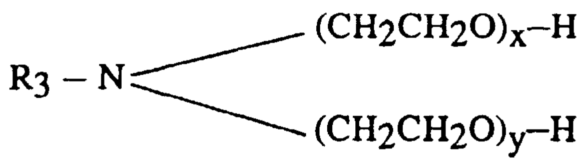

**(III)**

formule dans laquelle $R_3$ est un radical alkyle ou alkènyle en $C_8$-$C_{22}$ et x et y sont des nombres entiers tels que (x + y) soit compris entre 5 et 50.

**14.** Composition selon l'une des revendications 12 ou 13, caractérisée par le fait que l'agent émulsifiant représente 5 à 45 % en poids par rapport au poids du (des) produit(s) actif(s) de formule(s) I et/ou II.

**15.** Composition selon l'une des revendications 12 à 14, caractérisée par le fait que la phase aqueuse de l'émulsion contient au moins un solvant organique choisi dans le groupe formé par le diéthylène glycol, l'hexylène glycol, le monopropylène glycol et un aminoalcool de formule IV :

$$HO\text{-}A\text{-}NR_4R_5 \qquad (IV)$$

formule dans laquelle A est un radical alkylène, linéaire ou ramifié, en $C_2$-$C_4$ et $R_4$ et $R_5$, identiques ou différents, sont H ou un radical alkyle en $C_1$-$C_3$.

**16.** Peinture pour l'utilisation selon la revendication 8 contenant, d'une part, au moins une polyamine de formule I dans laquelle $R_1$ est un radical dodécyle et/ou au moins une polyamine de formule I dans laquelle $R_1$ est un radical tétradécyle et, d'autre part, au moins une polyamine de formule I dans laquelle $R_1$ est un radical octadécényle.

**Patentansprüche**

**1.** Verwendung wenigstens eines Polyamins der Formel I:

$$\mathbf{R_1\text{-}NH[(CH_2)_3\text{-}NH]_n\text{-}(CH_2)_3NH_2 \qquad (I)}$$

worin $R_1$ für einen $C_8$-$C_{22}$-Alkyl- oder -Alkenylrest steht und N eine ganze Zahl von 0 bis 3 (einschließlich der Grenzwerte) ist,
und/oder wenigstens eines Monoamins der Formel II:

$$\mathbf{R_2NH_2 \qquad (II)}$$

worin $R_2$ für einen $C_8$-$C_{22}$-Alkyl oder -Alkenylrest steht, als biozide Wirkstoffe zur Behandlung von Wasser oder wasserberührenden Oberflächen, um an den wasserberührenden Oberflächen das Anhaften von Makroorganismen, die dem Tierreich angehören, insbesondere Weichtieren, zu verhindern und/oder diese zu entfernen und/oder zu kontrollieren.

**2.** Verwendung nach Anspruch 1, dadurch gekennzeichnet, daß man als Polyamin der Formel I ein Gemisch verwendet, das einerseits wenigstens ein Polyamin der Formel I, worin $R_1$ ein Dodecylrest ist, und/oder wenigstens ein Polyamin der Formel I, worin $R_1$ ein Tetradecylrest ist, und andererseits wenigstens ein Polyamin der Formel I, worin $R_1$ ein Octadecenylrest ist, enthält.

**3.** Verwendung nach einem der Ansprüche 1 oder 2, dadurch gekennzeichnet, daß man den Wirkstoff (die Wirkstoffe) von Zeit zu Zeit ins Wasser einspritzt.

**4.** Verwendung nach einem der Ansprüche 1 oder 2, dadurch gekennzeichnet, daß man den Wirkstoff (die Wirkstoffe) kontinuierlich ins Wasser einspritzt.

**5.** Verwendung nach einem der Ansprüche 3 oder 4, dadurch gekennzeichnet, daß man den Wirkstoff (die Wirkstoffe) als Emulsion in wäßriger Phase einsetzt.

**6.** Verwendung nach Anspruch 5, dadurch gekennzeichnet, daß man eine Wirkstoffemulsion verwendet, die mit Hilfe eines Emulgators erhalten wird, der wenigstens ein polyethoxyliertes, tertiäres Amin der Formel III umfaßt,

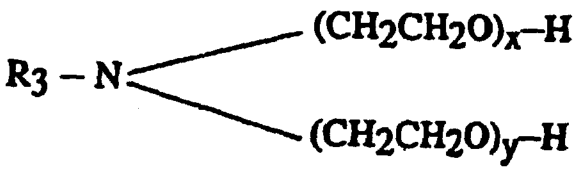

(III)

worin $R_3$ für einen $C_8$-$C_{22}$-Alkyl- oder -Alkenylrest steht und x und y ganze Zahlen sind, so daß (x + y) 5 bis 50 beträgt.

**7.** Verwendung nach einem der Ansprüche 1 oder 2, dadurch gekennzeichnet, daß man auf die wasserberührenden Oberflächen eine Beschichtung aufbringt, die den Wirkstoff (die Wirkstoffe) enthält.

**8.** Verwendung nach Anspruch 7, dadurch gekennzeichnet, daß man wenigstens einen Wirkstoff der Formel(n) I und/oder II mit einem pulverförmigen Füllstoff vermischt, ein Anstrichmittel zubereitet, wobei man das so erhaltene Gemisch wie ein Pigment verwendet, und das Anstrichmittel auf die wasserberührenden Oberflächen aufträgt.

**9.** Biozide Zusammensetzung zur Verwendung nach einem der Ansprüche 3 oder 4, dadurch gekennzeichnet, daß sie ein Polyamingemisch umfaßt, das einerseits wenigstens ein Polyamin der Formel I, worin $R_1$ ein Dodecylrest ist, und/oder wenigstens ein Polyamin der Formel I, worin $R_1$ ein Tetradecylrest ist, und andererseits wenigstens ein Polyamin der Formel I, worin $R_1$ ein Octadecenylrest ist, enthält.

**10.** Zusammensetzung nach Anspruch 9, dadurch gekennzeichnet, daß sie ein Gemisch umfaßt aus Polyamin(en), das (die) aus Talg und/oder einem Olein enthaltenden tierischen oder pflanzlichen Öl gewonnen wird (werden), mit wenigstens einem aus Koprah gewonnenen Polyamin.

**11.** Zusammensetzung nach einem der Ansprüche 9 oder 10, dadurch gekennzeichnet, daß sie höchstens 15 Gew.-% Amin(e) der Formel II enthält.

**12.** Zusammensetzung nach einem der Ansprüche 9 bis 11, zur Verwendung nach Anspruch 5, dadurch gekennzeichnet, daß sie als wäßrige Emulsion vorliegt.

**13.** Zusammensetzung nach Anspruch 12 zur Verwendung nach Anspruch 6, dadurch gekennzeichnet, daß sie einen Emulgator umfaßt, der wenigstens ein polyethoxyliertes, tertiäres Amin der Formel III umfaßt,

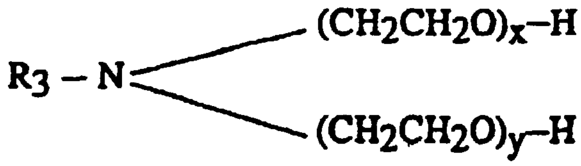

(III)

worin $R_3$ für einen $C_8$-$C_{22}$-Alkyl- oder -Alkenylrest steht und x und y ganze Zahlen sind, so daß (x + y) 5 bis 50 beträgt.

**14.** Zusammensetzung nach einem der Ansprüche 12 oder 13, dadurch gekennzeichnet, daß der Emulgator 5 bis 45 Gew.-%, bezogen auf das Gewicht des Wirkstoffs (der Wirkstoffe) der Formel(n) I und/oder II, ausmacht.

**15.** Zusammensetzung nach einem der Ansprüche 12 bis 14, dadurch gekennzeichnet, daß die wäßrige Phase der Emulsion wenigstens ein organisches Lösungsmittel enthält, das ausgewählt ist unter Diethylenglykol, Hexylenglykol, Monopropylenglykol und einem Aminoalkohol der Formel IV:

$$\mathbf{HO\text{-}A\text{-}NR_4R_5} \qquad \mathbf{(IV)}$$

worin A für einen linearen oder verzweigten $C_2$-$C_4$-Alkylenrest steht und $R_4$ und $R_5$, die gleich oder verschieden sein können, H sind oder für einen $C_1$-$C_3$-Alkylrest stehen.

**16.** Anstrichmittel zur Verwendung nach Anspruch 8, das einerseits wenigstens ein Polyamin der Formel I, worin $R_1$ ein Dodecylrest ist, und/oder wenigstens ein Polyamin der Formel I, worin $R_1$ ein Tetradecylrest ist, und andererseits wenigstens ein Polyamin der Formel I, worin $R_1$ ein Octadecenylrest ist, enthält.

## Claims

**1.** Use, for treating water and surfaces in contact with the said water in order to prevent the binding of and/or to remove and/or to control macroorganisms belonging to the animal kingdom, in particular molluscs, on the said surfaces in contact with the water, of at least one polyamine of formula I:

$$R_1\text{-NH}[(CH_2)_3\text{-NH}]_n\text{-}(CH_2)_3NH_2 \qquad (I)$$

in which formula $R_1$ is a $C_8$-$C_{22}$ alkyl or alkenyl radical and n is an integer between 0 and 3 (limits included), and/or of at least one monoamine of formula II:

$$R_2NH_2 \qquad (II)$$

in which formula $R_2$ is a $C_8$-$C_{22}$ alkyl or alkenyl radical, as biocidal active products.

**2.** Use according to Claim 1, characterized in that a mixture containing, on the one hand, at least one polyamine of formula I, in which $R_1$ is a dodecyl radical, and/or at least one polyamine of formula I, in which $R_1$ is a tetradecyl radical, and, on the other hand, at least one polyamine of formula I, in which $R_1$ is an octadecenyl radical, is used as polyamine of formula I.

**3.** Use according to either of Claims 1 and 2, characterized in that the active product(s) is (are) injected into the water intermittently.

**4.** Use according to either of Claims 1 and 2, characterized in that the active product(s) is (are) injected into the water continuously.

**5.** Use according to either of Claims 3 and 4, characterized in that the active product(s) is (are) used in the form of an emulsion in an aqueous phase.

**6.** Use according to Claim 5, characterized in that an emulsion of active product(s) is used, which is obtained using an emulsifier comprising at least one polyoxyethylenated tertiary amine of formula III:

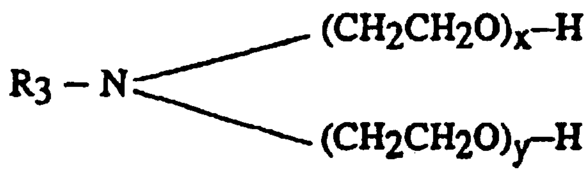

(III)

in which formula $R_3$ is a $C_8$-$C_{22}$ alkyl or alkenyl radical and x and y are integers such that (x + y) is between 5 and 50.

**7.** Use according to either of Claims 1 and 2, characterized in that a coating containing the active product(s) is applied to the surfaces in contact with the water.

**8.** Use according to Claim 7, characterized in that at least one active product of formula(e) I and/or II is mixed with a pulverulent filler, a paint is prepared using the mixture thus obtained as a pigment and the said paint is applied to the surfaces in contact with the water.

**9.** Biocidal composition for the use according to either of Claims 3 and 4, characterized in that it comprises a mixture of polyamines containing, on the one hand, at least one polyamine of formula I in which $R_1$ is a dodecyl radical and/or at least one polyamine of formula I, in which $R_1$ is a tetradecyl radical, and, on the other hand, at least one polyamine of formula I, in which $R_1$ is an octadecenyl radical.

**10.** Composition according to Claim 9, characterized in that it comprises a mixture of polyamine(s) derived from tallow and/or of polyamine(s) derived from a plant or animal oil containing olein with at least one polyamine derived from coconut.

**11.** Composition according to either of Claims 9 and 10, characterized in that it contains not more than 15% by weight of amine(s) of formula II.

**12.** Composition according to one of Claims 9 to 11, for the use according to Claim 5, characterized in that it is in the form of an aqueous emulsion.

**13.** Composition according to Claim 12, for the use according to Claim 6, characterized in that it comprises an emulsifier comprising at least one polyoxyethylenated tertiary amine of formula III:

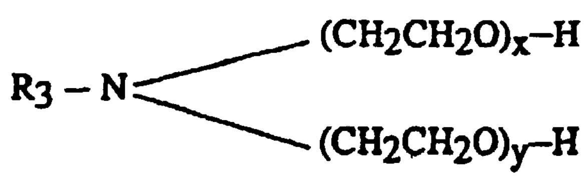

(III)

in which formula $R_3$ is a $C_8$-$C_{22}$ alkyl or alkenyl radical and x and y are integers such that (x + y) is between 5 and 50.

**14.** Composition according to either of Claims 12 and 13, characterized in that the emulsifier represents 5 to 45% by weight relative to the weight of the active product(s) of formula(e) I and/or II.

**15.** Composition according to one of Claims 12 to 14, characterized in that the aqueous phase of the emulsion contains at least one organic solvent chosen from the group formed by diethylene glycol, hexylene glycol, monopropylene glycol and an amino alcohol of formula IV:

$$HO\text{-}A\text{-}NR_4R_5 \quad (IV)$$

in which formula A is a linear or branched $C_2$-$C_4$ alkylene radical and $R_4$ and $R_5$, which may be identical or different, are H or a $C_1$-$C_3$ alkyl radical.

**16.** Paint for the use according to Claim 8, containing, on the one hand, at least one polyamine of formula I, in which $R_1$ is a dodecyl radical and/or at least one polyamine of formula I, in which $R_1$ is a tetradecyl radical, and, on the other hand, at least one polyamine of formula I, in which $R_1$ is an octadecenyl radical.